# EUROPEAN PATENT SPECIFICATION

(11) **EP 2 129 226 B1**
(45) Date of publication and mention of the grant of the patent: **25.04.2018**
(21) Application number: 08742348.9
(22) Date of filing: 27.03.2008
(51) Int. Cl.: A23K 20/147, A23K 20/158, A23K 20/163, A23K 50/40

(54) **FOOD COMPOSITIONS INCORPORATING MEDIUM CHAIN TRIGLYCERIDES**
LEBENSMITTELZUSAMMENSETZUNG MIT MITTELKETTIGEN TRIGLYCERIDEN
COMPOSITIONS ALIMENTAIRES INCORPORANT DES TRIGLYCÉRIDES À CHAÎNE MOYENNE

(30) Priority: 02.04.2007 US 921412 P
(43) Date of publication of application: 09.12.2009
(73) Proprietor: Nestec S.A., 1800 Vevey (CH)
(72) Inventor: SANTANA, Ruben D., Ballwin, Missouri 63021 (US); GORE, Asa M., St. Louis, Missouri 63129 (US); BHATNAGAR, Sandeep, Ballwin, Missouri 63021 (US); KWAKWA, Akua Agyekumaa, Piscataway, New Jersey 08854 (US)
(74) Representative: Rupp, Christian
(86) International application number: PCT/US2008/004062
(87) International publication number: WO 2008/123946

(56) References cited:
- EP-A1- 0 294 119
- CH-A5- 600 790
- US-A- 3 658 555
- US-A- 4 961 934
- US-A- 5 587 193
- US-A- 5 866 555
- US-A- 5 866 555
- US-A- 5 891 490
- US-A- 6 004 926
- US-A- 6 060 094
- US-A1- 2004 076 719
- US-A1- 2005 100 584
- US-A1- 2005 181 019
- US-A1- 2006 035 003
- WU Y.V. ET AL.: 'Evaluation of Corn Gluten Metal as a Protein Source in Tilapia Diets' J. AGRIC. FOOD CHEM. vol. 43, no. 6, 1995, pages 1585 - 1588, XP000508206

## Description

### CROSS REFERENCE TO RELATED APPLICATIONS

### BACKGROUND OF THE INVENTION

### Field of the Invention

The present invention relates generally to food compositions and particularly to food compositions integrally incorporating relatively large amounts of medium and is defined strictly by the claims.

### Description of Related Art

Medium chain triglycerides ("MCT" or "MCTs") are lipid molecules that have been included for various purposes in food compositions for animals or humans. MCTs have been added to "wet" foods such as canned food and other prepared food and have been used to some extent in, or as coatings on, dry food. US 2005/0100584 A1 is directed to compositions that comprise one or more medium chain fatty acid triglycerides for animal consumption to aid in weight loss or reducing weight gain. Practical considerations appear to limit the amount of MCTs that can be used, particularly for dry foods. For example, while wet food compositions may incorporate a significant amount of MCTs, they may be subject to separation, flavor issues, and other problems. For dry foods, such as extruded and baked products, the compositions are strictly subject to limits wherein the MCTs can not be increased above a certain threshold in many products. MCTs have thus been used as a coating or surface application for such foods. Surface application, such as coating, poses practical problems for packaging and reduces consumer appeal. For example, consumption or administration of such food compositions is far more cumbersome if a coating must be poured on or mixed in at the time of consumption or if the dry food has an oily appearance or feel. In addition, large quantities of MCTs not integrally incorporated into the food matrix can cause problems with palatability and tolerance of such food compositions.

Chemically, medium chain triglycerides comprise a group of triglycerides having three medium chain length (about 6-12 carbon) fatty acid molecules esterified to a glycerol molecule. Such compositions are different, both physically and chemically, from the majority of fats typically used in food technology for formulating food products. MCTs tend to be shorter and have different functional properties for processing than their longer-chain counterparts. For example, MCTs are typically liquid at room temperature, unlike many other functional fats used by food technologists.

In addition to having different properties that must be considered for formulation of food compositions, MCTs pose other challenges for formulators. When attempting to formulate a food with a specified macronutrient content, addition of MCTs requires removal of other fat sources. Many food compositions are formulated such that the fat provides significant satiety, flavor, mouthfeel, texture, and other desirable functional qualities that the consumer is seeking from a particular food product. Thus, mere substitution of one fat for another is not a practical solution because the formulation of a food product involves complex interactions between the various ingredients or components.

There is, therefore, a need for novel compositions and methods for solving the problems associated with incorporating MCTs into food compositions. Compositions and methods are needed to permit the inclusion of a relatively large amount of MCTs in a food composition, particularly a dry food composition, while (1) maintaining a predetermined macronutrient composition, (2) ensuring that the food composition maintains acceptable functional qualities while avoiding excessive fat mobilization or separation, (3) avoiding the need to apply the MCTs as an external coating but while allowing for the inclusion of flavor-enhancing and aroma-enhancing coatings to enhance the final product's acceptance, and (4) reducing the undesirable aspects associated with handling and packaging compositions containing MCTs.

### SUMMARY OF THE INVENTION

It is, therefore, an object of the present invention to provide compositions and methods that permit the inclusion of a relatively large amount of MCTs in a food composition.

It is another object of the invention to provide compositions and methods that permit the inclusion of a relatively large amount of MCT in a food composition while maintaining a predetermined macronutrient composition.

It is a further object of the invention to provide compositions and methods that permit the inclusion of a relatively large of MCT in a food composition while ensuring that the food composition maintains acceptable functional qualities yet avoiding excessive fat mobilization or separation.

It is another object of the invention to provide compositions and methods that permit the inclusion of a relatively large amount of MCT in a food composition while avoiding the need to apply MCTs as an external coating yet allowing for the inclusion of flavor-enhancing and aroma-enhancing coatings to enhance the final product's acceptance.

It is another object of the invention to provide compositions and methods that permit the inclusion of a relatively large amount of MCT in a food composition while reducing the undesirable aspects associated with handling and packaging compositions containing MCTs.

These and other objects are achieved using novel food compositions containing from 1-60% protein, from 1-50% carbohydrate, from 1-40% MCT fat, and a maintaining amount of at least one MCT maintaining component, wherein the food composition comprises at least one MCT integrally incorporated into the food matrix and at least one MCT not integrally incorporated into the food matrix, wherein the MCT from the MCT fat is integrally incorporated into the food composition and comprises from 2-10% of the food composition, wherein the MCT not integrally incorporated into the food matrix is a coating comprising 2 to 7% MCT of the food composition, wherein the food composition comprises from 10-15% total MCT, wherein the food composition is an extruded food composition, and wherein the MCT maintaining component comprises gluten meal.

### DETAILED DESCRIPTION OF THE INVENTION

### Definitions

The term "food composition" includes any food, feed, snack, food supplement, treat, meal substitute, or meal replacement, whether intended for a human or an animal. Animal food includes food or feed intended for any domesticated or wild species. In preferred embodiments, a food for an animal represents a nutritionally complete food or dietary composition, e.g., a pelleted, extruded, or dry food. Examples of such animal foods include extruded pet foods such as foods for dogs and cats.

The term "food matrix" includes the physical structure of the food composition. For example, in a canned food, the matrix is the continuum of the food product that occupies the can. For a pelleted or extruded food, the matrix is that structure that forms the pellet or extruded shape. Where an ingredient or component, such "as an MCT, is "integrally incorporated" into the food composition or matrix, that ingredient loses its identity and is mixed with the other ingredients or components such that it can no longer be readily distinguished as a distinct component but rather is a part of the matrix.

The term "integrally incorporated" means that a food ingredient or component is intimately admixed, blended, distributed, intermingled, or combined with other ingredients or components forming the matrix so as to become substantially less mobile, or even largely or completely integrated with, a part of, intrinsic to, or inseparable from, the bulk of the food matrix. For example, as used herein certain MCT are intrinsic to or integrally incorporated into the food matrix. These MCTs, especially in embodiments in which the food matrix is cooked or extruded, are distinguishable from MCT added extrinsically to the food composition, e.g., as a coating such as a spray-dried coating. The skilled artisan will appreciate that while the MCTs applied as a coating or otherwise may be relatively easy to remove, those MCTs that are integrally incorporated into the food's matrix will normally require fairly rigorous means to remove, e.g., the application of chemical means or substantial physical forces such as heating. Such means generally alter or destroy the food matrix.

The term "maintaining amount" means an amount of a MCT maintaining component effective for maintaining MCTs integrally incorporated into a food composition.

The term "medium chain triglycerides" or "MCTs" means any glycerol molecule ester-linked to three fatty acid molecules, each fatty acid molecule having 5-12 carbons. MCTs may be represented by the following general formula: 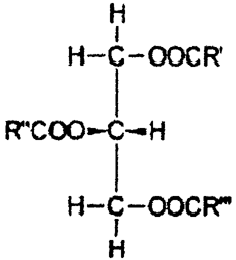 where R', R" and R''' are fatty acids having 5-12 carbons in the carbon backbone esterified to the a glycerol backbone. The structured lipids of this invention may be prepared by any process known in the art, such as direct esterification, rearrangement, fractionation, transesterification, or the like. For example, the lipids may be prepared from, or derived from, a source of vegetable oil, such as coconut oil, such as through a rearrangement process or the like. The length and distribution of the chain length may vary depending on the source oil. For example, MCTs containing 1-10% C6, 30-60% C8, 30-60% C10, 1-10% C10 are commonly derived from palm and coconut oils. MCTs containing greater than about 95% C8 at R1, R2 and R3 can be made by semi-synthetic esterification of octanoic acid to glycerin. Also useful herein are mixtures comprising MCTs with about 50% total C8 and/or about 50% total C10. Commercial sources for the foregoing MCT compositions are available and known to the skilled artisan. Such MCTs behave similarly and are encompassed within the term MCTs.

The term "MCT fat" means a fat suitable for use in food compositions that comprises at least one MCT.

The term "MCT maintaining component" means a compound or other substance capable of maintaining one or more MCTs integrally incorporated into a food composition.

The term "wellness of an animal" means the complete physical, mental, and social well being of the animal, not merely the absence of disease or infirmity.

The invention is not limited to the particular methodology, protocols, and reagents described herein because they may vary. Further, the terminology used herein is for the purpose of describing particular embodiments only and is not intended to limit the scope of the present invention. As used herein and in the appended claims, the singular forms "a," "an," and "the" include plural reference unless the context clearly dictates otherwise.

Unless defined otherwise, all technical and scientific terms and any acronyms used herein have the same meanings as commonly understood by one of ordinary skill in the art in the field of the invention.

All percentages for weights expressed herein are by weight of the total food composition unless specifically stated otherwise.

### The Invention

In one aspect, the invention provides food compositions comprising from 1-60% protein, from 1-50% carbohydrate, from 1-40% MCT fat, and a maintaining amount of at least one MCT maintaining component, wherein the food composition comprises at least one MCT integrally incorporated into the food matrix and at least one MCT not integrally incorporated into the food matrix, wherein the MCT from the MCT fat is integrally incorporated into the food composition and comprises from 2-10% of the food composition, wherein the MCT not integrally incorporated into the food matrix is a coating comprising 2 to 7% MCT of the food composition, wherein the food composition comprises from 10-15% total MCT, wherein the food composition is an extruded food composition, and wherein the MCT maintaining component comprises gluten meal. Preferably, the MCT comprises from about 4-10% of the food composition, most preferably from about 6-10% of the food composition. The invention is based upon the discovery that food compositions of the present invention cannot retain more than a few percent MCT in a stable manner without the inclusion of at least one MCT maintaining component. As a result, food compositions formulated or processed without these components have a tendency to be of low quality. For example, the fats readily separate or become unstable. Food compositions such as extruded foods often have improper density and volume attributes and may have low palatability. However, the inclusion of at least one MCT maintaining component can overcome these limitations and allow increased amounts of MCT to be successfully and stably incorporated into the food compositions while simultaneously improving the quality attributes of the food composition.

The protein, carbohydrate, fat, and other components in the food compositions comprise any of a variety of ingredients or combinations thereof selected for their contributions to the overall composition. Thus, a skilled artisan may choose from among natural, e.g., plant or plant-derived, animal or animal-derived, and microbial or microbially-derived, and synthetic ingredients or components. In particular embodiments, the ingredients may include cereal grains and fractions or components thereof, including corn, wheat, rice, barley, sorghum, millet, oats, rye, triticale, buckwheat, fonio, quinoa, lupines, soybean meal, soybean protein, soybean fiber, and the like. Also, the ingredients may include meat and meat by-products such poultry such as chicken, lamb, sheep, veal, beef, pork, fish, shellfish, or other seafood. The ingredients may include other animal products or by-products such as dairy products or by-products derived from the milk of any mammal species, eggs from any source, vitamins, minerals, salts, sweeteners, sources of fiber whether soluble or insoluble, flavoring or other palatants, coloring, and functional ingredients such as emulsifiers, stabilizers, softeners, functional coatings, and the like. Other important components or ingredients include fats such as vegetable or animal fats generally available for formulating food compositions.
In one embodiment, the source of fat is a plant fat such as com, soy, or canola oil. In another embodiment, an animal fat such as tallow is useful for providing calories from fat and providing an enticing flavor to meat-eating animals. Of course, combinations of any of the foregoing ingredients, such as fats, are known in the art and useful for optimizing the food compositions based on functional properties as well as price and availability.

In formulating the food compositions, the compositions may vary slightly to consider the price and availability of certain ingredients in the compositions and the batch to batch variation in the analysis of certain ingredients. Thus, a given composition may vary slightly from batch to batch, plant to plant, or even season to season depending on such factors. Notwithstanding such variation in specific ingredients selected for manufacturing a particular batch of a food composition, the overall composition (for example analysis of protein, carbohydrate, fat, fiber, or other component) may be held constant or at least substantially constant, e.g., in accordance with a label requirement such as a claim or guarantee of a minimum or maximum percent of a particular component.

The MCT maintaining component comprises one or more of a component that alters the structure of water in the composition, a component that binds fat in the food composition, or a component that emulsifies or stabilizes the fat in the food composition, of combinations thereof. Such components include components that bind water in a food matrix, bind fat, emulsify fat, stabilize emulsions of water and fat, or similarly maintain the MCT in association with the food matrix. By using one or more such components, the food matrix can contain from about 20-50% more MCT than a comparable formulation that simply has MCT added to the formulation or has one or more sources of fat replaced with MCT without the use of such components. Thus, these components share the property of allowing the food composition to retain a relatively large amount or percentage of MCT per unit weight or unit volume. Including one or more such components increases the actual retention of MCT in the food matrix and, in some embodiments, provides improvements in other functional properties such as maintaining desirable density, volume, texture, hardness, crunchiness, or the like in foods such as extruded food compositions.

Generally MCT maintaining components are starch, fiber, gluten meal, protein, an emulsifier, or a stabilizer. Also useful for the food compositions are gums and gelling agents. All such components are known in the art for inclusion in food compositions. However, the use of such components in a food composition specifically for the purpose of maintaining added MCTs integrally incorporated into the food composition is not known. Such components may be from any source whether natural or synthetic. Natural source includes all such sources whether animal, vegetable, or microbial in nature. For example proteins useful herein are potentially obtained from wither animal or vegetable sources, with vegetable sources currently preferred. Such proteins need not be isolated or purified, although fractions or partially purified proteins are compatible for use herein. Starches, or starch-like molecules, as well as gums, can also be from a variety of photosynthetic sources in the plant or microbial kingdom. Presently preferred are plant starches including those from any plant including tubers, vegetables, or seeds. Examples include com, rice and other cereals, potato and other tubers, as well as cassava, manioc, tapioca, and others. Also included are purified and partially purified fractions, as well as partially-digested starch products, such as dextrins, maltodextrins and the like, whether branched or unbranched. Various sources of fiber are also compatible for use herein, including but not limited to cellulose, psyllium, citrus fiber and the like. Examples of these are described in more detail herein.

Generally, the MCT maintaining component may comprise a component, fraction, or ingredient derived from a cereal crop. The component can comprise a classified product, or an end-product or by-product of milling of a cereal crop or cereal grain. For purposes used herein, the cereal is comprehensive of all plants recognized as "cereal" crops, whether currently used in commercial agriculture or merely known practically or botanically as being a "cereal." For example, "cereals" includes corn, wheat, rice, barley, sorghum, millet, oats, rye, triticale, buckwheat, fonio, quinoa, lupines, soybean meal, soybean protein, and soybean fiber. The skilled artisan will appreciate that in a given food composition, it not uncommon to use one or more such cereal products.

In the inventive composition, the MCT maintaining component comprises gluten meal. Preferably the gluten meal for use herein comprises from about 60-95% protein. In various embodiments, the gluten meal comprises at least about 65%, 70%, 75%, 77%, 79% to about 80% protein, or more. The gluten meal can be as a complete or partial replacement for one or more other components in a formulation. For example, a primary or secondary cereal ingredient in a formulation can be replaced by the gluten meal. In one embodiment, the gluten meal is added at 5, 10, 15 or even 20%. In one presently preferred embodiment, the gluten meal is a commercially-available com gluten meal added at up to about 14%.

In certain embodiments, the character of a food composition is known according to the identification of one or more of its cereal components, e.g., one composition may feature lamb and rice, chicken and rice, or the like. In such instances, it may be preferable to leave the primary or label identified cereal component as is in the formulation and replace a secondary or tertiary cereal component in the formulation with the functional component for maintaining the MCT integrally incorporated into the food. Alternatively, the skilled artisan can formulate the product replacing a portion or all of any of the cereal components present while preserving the overall character of the product.

Generally, the MCT maintaining component may comprise starch or a starch product. The component may be a starch obtained from a cereal product, e.g., rice starch, com starch, or a combination thereof. The starch ingredient can be added to replace a portion or all of another cereal component in a base formula, for example, a primary or preferably secondary, tertiary (or lesser) cereal component.One or more such starches can be added at up to about 5%, alone or in combination. A functional starch ingredient, e.g., one or more starches, may also be used in combination with a functional gluten meal such a high-protein gluten meal having about 75% to 80% or more protein, to accomplish the function of maintaining the MCTs integrally incorporated into the food composition, e.g. in the food matrix.

Generally, the MCT maintaining component may comprise fiber from soy. The fiber may be from soy cotyledons. Soy fiber can be added to a food composition or can be used to replace one or more ingredients in an existing formulation. The soy fiber can be added for example at up to about 5%.

Generally, the food compositions may comprise one or more of soy cotyledon fiber at up to 5%, starch from com or rice at up to 5%, gluten meal having at least about 75% to about 80% protein at up to about 14%, or any combination thereof. Such compositions may be preferred by skilled artisans because they provide maximum flexibility in developing new compositions with the desired properties. For example, the artisan can take price and availability in a given market or manufacturing facility into consideration while considering the functional properties of maintaining the MCT integrally incorporated in the food composition and the effect of the formulation on flavor, texture, and processing properties such as extrusion properties.

In a preferred embodiment, the food compositions comprise a macronutrient composition suitable for the type of food being designed. In one embodiment, the food composition has from about 20-32% protein, about 30-50% carbohydrate, about 5-20% fat, and about 15-25% moisture. In another embodiment, the food composition is a pet food composition, e.g., a premium or super-premium pet food composition. In one embodiment, the pet food is formulated for canines and has a protein content of about 20-30%, preferably about 24-28%, and more preferably about 25-27%. In one embodiment the protein content of a dog food composition is about 26%. In another embodiment, the formulation is for felines and has a protein content of about 35-45%, preferably about 37-42%, and more preferably about 39-41%. In one embodiment the protein content of a cat food composition is about 40%.

In another aspect, invention provides food compositions comprising at least one MCT integrally incorporated into the food matrix as described herein and at least one MCT not integrally incorporated into the food matrix. Generally, the MCT not integrally incorporated into die food matrix is applied to the surface of the food composition, e.g., as a coating applied after the composition is produced, manufactured, formed, or shaped. The compositions comprise from 10-15% total MCT (MCT integrally incorporated into the food composition plus MCTs not integrally incorporated into the food matrix). Such compositions are useful for producing a significant quantity of MCTs for the consumer while not substantially impacting the perceived quality of the composition, e.g. flavor, texture, etc., or its acceptance, e.g. palatability and mouthfeel.

the present invention, the food composition has from 2-10% MCT integrally incorporated in the composition and from 2-7% MCT not integrally incorporated in the composition. Preferably, the composition has 3-9%, 4-8%, 5-7% MCT incorporated integrally and any further MCTs applied to the surface of the composition. In one embodiment, the food composition is an extruded composition containing integrally incorporated MCTs and a coating of MCTs applied after extrusion. In present invention, the coating has 2 to 7% MCTs. The coatings useful herein can further comprise one or more flavor enhancing agents, palatability enhancing agents, aroma enhancing agents, and color enhancing agents. For pet food applications, meat and/or fish flavorings are useful and can be combined with the MCTs. Also useful are palatants such as tallow and other compounds that enhance the overall palatability of the food.

Generally, the food composition may be a wet food such as a canned food, frozen food, or fresh food product. Generally, the food composition may be shelf stable and in another general disclosure it may have to be refrigerated. The food composition may be an intermediate moisture product or a dry food product. Dry food products include a variety of foods of various moisture contents such that they are relatively shelf-stable and resistant to microbial or fungal deterioration or contamination. The dry food compositions according to the invention are extruded food products such as pet foods or snack foods for either humans or companion animals.

In a further aspect, the invention provides processes for manufacturing the food compositions of the present invention. The processes comprise (a) combiningat least a first portion of the MCT with a MCT maintaining component prior to a processing operation; (b) processing the food composition; and (c) adding a second portion of the MCT to the processed food composition as a coating or surface treatment, wherein the MCT in the coating comprises 2-7% of the food composition, and wherein the food composition comprises 10-15% total MCT.

In the present invention, the processes are for manufacturing a food composition comprising from about 1-60% protein, from about 1-50% carbohydrate, from about 1-40% MCT fat, and a maintaining amount of at least one MCT maintaining component, wherein the food composition comprises at least one MCT integrally incorporated into the food matrix and at least one MCT not integrally incorporated into the food matrix, wherein the MCT from the MCT fat is integrally incorporated into the food composition and comprises from about 2-10% of the food composition, wherein the MCT not integrally incorporated into the food matrix is a coating comprising 2 to 7% MCT of the food composition, wherein the food composition comprises from 10-15% total MCT, wherein the food composition is an extruded food composition, and wherein the MCT maintaining component comprises gluten meal.

In one embodiment, the MCT is combined with one or more ingredients or combinations of ingredients prior to processing operation or manufacturing step. For example, the MCT could be combined with other liquid ingredients, or may be combined with dry ingredients. This combination is made prior to a processing operation involved in producing the food composition, such as a blending, heating, steaming, cooking, forming, or other processing operation.

The MCT maintaining components useful in the process are the same MCT maintaining components useful in the food compositions of the present invention, e.g., the starches, fibers, gluten meals, proteins, emulsifiers, stabilizers, gums, gelling agents, cereal crop, and fiber described herein.

The processes provided herein can be applied to any type of manufactured or processed food composition. In the present invention, the food processing operation in step (a) is an extrusion step and the processing step in (b) is extruding the food composition. Any type of extrusion useful for food products is compatible herewith, such as single-, twin-, or multiple-screw extrusion processes, with or with configurations such as interrupted flights to improve intermixing, kneading, or the like. Various means of streaming product into an extrusion process are compatible for use herein. For example, all ingredients may combined into a single mix that is fed into the extruder, or certain sub-combinations of ingredients may be prepared ahead of time, e.g., for mixing immediately prior to extrusion or simultaneous mixing and extrusion. Moisture inputs such as via wet ingredients, water addition, or steam injection may be useful as well. The skilled artisan will know how to measure the moisture content going into and coming out of the extruder and will further know how to measure or assess the proper expansion, density, volume, texture, grain, and other such quality attributes of the final extruded food composition.

The processes of the present invention, additional MCTs are provided in the form of a coating or surface treatment. Such coating or treatment comprises at least a second portion of MCT and, optionally, one or more flavor-enhancing agents, palatability-enhancing agents, aroma-enhancing agents, or color-enhancing agents. By incorporating a first portion of MCT into the food composition before the extrusion or other processing step (e.g. cooking), the process of the invention allows incorporation of larger total MCT than would otherwise be possible. In addition, the inclusion of for example, the flavor and/or aroma-enhancing agents allows for a significant increase in the palatability of the food composition. One useful palatant for inclusion in a coating is tallow or another source of flavor, such as another flavorful fat. Meat extracts and fish extracts may also be very useful for such purposes where the food compositions are pet foods. The MCT in the coating comprises 2 to 7% of the food composition. There are a variety of known means for applying such coatings or surface treatments, not limited to simple mixing, rolling, or bathing, spraying, injecting, spray drying, vacuum coating, vacuum injection, and the like.

Further described are methods for formulating food compositions comprising a fixed macro nutrient composition wherein up to 15% of the fat in the food formulation is replaced with one or more MCTs. The method comprises removing a portion of fat from the food compositing and replacing the removed fat with one or more MCTs.

In another aspect, the invention provides methods of formulating a food composition comprising MCT according to the present invention. The methods comprise (a) selecting a formula comprising ingredients for a food composition that does not contain MCT; (b) determining an amount of MCT to be added to the food composition containing MCT; (c) determining a source and amount of fat in the formula for the food composition that does not contain MCT, to be replaced with the MCT in the food composition containing the MCT; (d) eliminating the source of fat from the formula in an amount equal to the amount of MCT to be added to the food composition containing MCT, so as to maintain the total fat concentration in the food composition containing the MCT substantially unchanged from the food composition not containing MCT; (e) replacing a least a portion of one or more cereal ingredients in the formula selected in step (a) with at least one MCT maintaining component, so as to maintain the total protein and carbohydrate concentration in the food composition containing the MCT substantially unchanged from the food composition not containing MCT; and (f) formulating the food comprising MCT by including MCT in the formula in place of the source of fat eliminated in step (d); and including the at least one MCT maintaining component in place of the one or more cereal ingredients to obtain the food compositions of the present invention as disclosed under [0012].

In one embodiment, the formulation method entails modifying an existing product or formulation, such as a commercially-viable formulation, by replacing a fat source with a source of MCT while maintaining the fat content of the food composition substantially unchanged from that in the existing formula. Techniques for modifying existing formulae are known in the art. However, many formulas, especially for dry and intermediate moisture products cannot be readily modified simply by replacing an existing fat source with MCT, particularly where the concentration of MCT exceeds a certain threshold. Rather those MCT will destabilize the food and may readily separate, or alter the food composition properties or quality on further processing. According to the present invent in, the additional step of including at least one ingredient that maintains the MCT integrally incorporated into the food composition, for example as a part of the food matrix that constitutes the core of the food composition, is useful for maintaining the MCT in a relatively stable association as a part of die food composition itself. In one embodiment, the total amount of MCT in the food product is from 10% to 15%.

The one or more cereal ingredients replaced in step (e) do not include a primary cereal ingredient in the food composition in certain embodiments. This is particularly useful where the primary cereal is involved in establishing the character of the food product, for example as a "rice product" or a "corn product", and it is not desirable to reduce the amount of primary cereal present. Product labels, consumer preferences, flavor, heath concerns, or other reasons are all sufficient bases for not replacing the primary cereal ingredient in a food product formulation.

As with the food compositions and the processes provided herein the MCT maintaining component comprises any component or ingredient that is useful for retaining the MCT in the food composition, for example as part of the food matrix itself. Examples of ingredients or components that are useful for such purposes are a starch, fiber, gluten meal, protein, an emulsifier, or a stabilizer.

The MCT maintaining components useful in the methods are the same MCT maintaining components useful in the food compositions of the present invention, e.g., the starches, fibers, gluten meals, proteins, emulsifiers, stabilizers, gums, gelling agents, cereal crop, and fiber described herein.

In one embodiment, the food composition produced using the methods comprises 20 to 32% protein, 30 to 50% carbohydrate, 5 to 20% fat, and 15 to 25% moisture. The food composition has 2 to 10% MCT integrally incorporated therein and may optionally have a coating containing additional MCT.

In various embodiments, the food composition being reformulated is an extruded food product, e.g., an extruded snack food or an extruded pet food.

In one embodiment, the food composition further comprises a MCT coating applied after extrusion. The coating provides about 2 to 7% additional MCT. In another embodiment, the coating further comprises one or more flavor-enhancing agents, palatability-enhancing agents, aroma-enhancing agents, and color-enhancing agents.

The food composition comprises 10-15% total MCT. The skilled artisan, given the methods provided, will be able to formulate and manufacture food compositions with significantly more MCTs than was possible before the present invention. This includes producing food compositions that maintain the formulation with a constant macro-nutrient profile, e.g. protein, carbohydrate, and fat amounts, while maintaining the desired functional properties of the food composition such as flavor, texture, volume, density, mouthfeel, palatability, and the like.

In another aspect, the present invention provides methods for promoting the health and wellness of an animal. The methods comprise feeding the animal food compositions of the present invention. The compositions comprise from 1-60% protein, from 1-50% carbohydrate, from 1-40% MCT fat, and a maintaining amount of at least one MCT maintaining component, wherein the food composition comprises at least one MCT integrally incorporated into the food matrix and at least one MCT not integrally incorporated into the food matrix, wherein the MCT from the MCT fat is integrally incorporated into the food composition and comprises from 2-10% of the food composition, wherein the MCT not integrally incorporated into the food matrix is a coating comprising 2 to 7% MCT of the food composition, wherein the food composition comprises from 10-15% total MCT, wherein the food composition is an extruded food composition, and wherein the MCT maintaining component comprises gluten meal. Preferably, the MCT comprises from about 4-10% of the food composition, most preferably from about 6-10% of the food composition. The method can comprise feeding the animal a combination of such food compositions.

### EXAMPLES

This invention can be further illustrated by the following examples.

### Example 1

### MCT Incorporation into a Pet Food Formulation

Formulations: Four formulations were prepared for incorporating MCT into a premium pet food formulation of an extruded Chicken and Rice dog food. The macronutrient density was maintained as constant among each of the formulae. Each formula provided the same amount of protein, carbohydrate, and fat per unit weight.
1. Control Formula: Various amounts of MCTs were substituted for an equivalent amount of tallow in the basic formula.
2. 5% Starch: Various amount of MCTS were substituted for an equivalent amount of tallow; simultaneously, starch from rice or com was added at up to 5% in place of a secondary or tertiary cereal ingredient in the formula, such as wheat or com meal.
3. 5% Fiber: Various amount of MCTS were substituted for an equivalent amount of tallow; simultaneously, fiber from soy cotyledons was added at up to 5% in place of a secondary or tertiary cereal ingredient in the formula, such as wheat or corn meal.
4. High Protein Gluten Meal: Various amount of MCTS were substituted for an equivalent amount of tallow; simultaneously, high protein gluten meal (80% protein) from com was added at up to 14% in place of a secondary or tertiary cereal ingredient in the formula, such as wheat or com meal.

Palatability Studies: Palatability evaluation of the nutritionally complete food products was performed in panels of dogs. Panels consisting of a mix of breeds, distributed as equally as possible, including among sexes. Each dog was at least 12 months of age, however small breeds (e.g. terriers) were used at 10 months of age, if needed. Each experimental panel consisted of twenty to thirty canines. The test was conducted such that no discomfort or stress occurred at any time during the test. Any dogs with reduced food consumption were referred to the staff veterinarian for observation.

Diets were considered generally palatable and nutritionally adequate to meet the needs of the adult dog. All dogs were fed daily a specified quantity of food based on body weight and body condition. This amount was re-assessed monthly. A choice of two bowls with different products, each containing the dog's daily ration, were offered simultaneously. When it was determined (subjectively) that a dog has consumed its daily ration from one or both bowls, all food was removed and the remaining amount of each food was weighed. The maximum length of time the food compositions were offered to the dogs was 20 minutes.

The dogs were housed individually in kennel runs, and ample water was provided with an automatic watering system. Food intake was measured daily; body weight measured monthly. The results, which were statistically analyzed, are shown in Table 1.

Packaging Studies: The following test method for fat staining was used. Each packaged formulation was subjected to one hour of weighted vibration, followed by storage at 140 °F for 14 days. Products were packaged in 8" x 3 "x 15" bags.

Processing Variations: Specific processing conditions were varied to assess requirements for proper cooking and density of the extruded product. Conditions varied included:
1. Extrusion Parameters: Extruder screw configuration and use of interrupted or high shear flights;
2. Moisture Control: Water and/or .steam addition; and
3. Addition of MCTs to one or more wet or dry ingredients prior to extrusion.

Results: Initial results established that the control formulation could only retain or absorb a maximum of 6.6% MCT. Any attempt to incorporate MCT in excess of this amount resulted in high mobility of the fat. This separation was evident, for example, in the staining of the packages with oily/fatty material. Further comparative photographs showed the expansion volume of the product was greatly reduced upon the inclusion of the MCT in the control formula (data not shown). The volume, pore size and density of the product were all significantly decreased based on visual inspection. Further, the palatability was significantly reduced relative to the control product without MCT included. Restricting the opening on the extruder to about 0.25" was useful for all products with MCTs added.

Previous work showed that palatability decreases when MCTs were added to the outside of the product. The MCT maintaining components that help minimize the MCT mobility and increase the incorporation of the MCT into the matrix allow more MCT to be incorporated integrally or internally, and minimize the need to ad MCT externally. This allows the use of palatability-enhancing coatings to be placed on the outside, including tallow and liquid or powdered animal digests.

It was observed that the original formula with 12.5% MCT compared to a reformulated product having 12.5% MCT along with, for example 5% rice or com starch was not satisfactory in several aspects. The original formula with 12.5% MCT had a density of 451 g/l compared with the improved density of 386 g/l with the inclusion of the rice or corn starch.

The results of palatability studies are shown in Table 1. As can be seen, the inclusion of high MCT without the inclusion of one of the ingredients to keep the MCT from mobilizing, such as a starch, or gluten meal, resulted in significantly decreased palatability.

**Table 1**

| Palatability Improvement Chicken & Rice Palatability Improvement Using New Ingredients and New Coating System (2% 10L + 0.05% Casserole FL) | |
|---|---|
| | Pal Ratios |
| Dog Adult C&R vs. | |
| Dog Adult C&R + 12.5% MCTs | 31 : 69 |
| Dog Adult C&R vs. | |
| Dog Adult C&R (5% Rice Starch) + 12.5% MCTs | 33 : 67 |
| Dog Adult C&R vs. | |
| Dog Adult C&R (5% Fibrim) + 12.5% MCTs | 48 : 52 |
| Dog Adult C&R vs. | |
| Dog Adult C&R (12.5% Com Gluten Meal 80%) + 12.5% MCTs | 43 : 57 |

These options had:
6.6 - 8.5% MCTs added internally
4.0 - 5.9% MCTs added externally
Total of 12.5% MCTs

The new ingredients allowed 1.35 - 3.25% more edible tallow to be added externally
(1) Edible tallow applied externally has been shown to improve palatability in dogs.
(2) Initial palatability tests, which included no edible tallow applied externally, showed poor palatability.
(3) The experimental ingredients tested allowed more edible tallow to be applied externally.

Referring to Table 1, the use of fiber (e.g. soybean cotyledon (5% Fibrim)) helped to expand the product and absorb MCTs in the food matrix. The use of starch appeared to accomplish the same result. The standard coating system without tallow did not help to improve palatability. Moreover, these results show that the addition of 12.5% MCTs negatively impacts palatability. The last palatability test shows the effect of fat binders and ingredients that maintain the MCT integrally incorporated into the food matrix on palatability. Since these ingredients helped increase the amount of MCTs added internally, less MCTs were used externally in the form of a coating. Consequently, more tallow (4.4%) and liquid animal digest were applied externally, which helped improve palatability.

The effect of the special ingredients to maintain the MCT incorporated integrally into the matrix was also to better expand the kibble during extrusion, resulting in a less dense, preferred texture. This preferred texture could be seen to more open and "spongy" in appearance. The ingredients also increase significantly increase the internal absorption of MCTs for the test formulations. Whereas the control diet incorporated a maximum of 6.6% MCT, the food product with high-protein gluten meal added (14% Corn Gluten Meal (80% protein)) incorporated 8.5% MCTs internally, while 5% rice starch or soybean cotyledon fiber incorporated 8.1% MCT.

The accelerated packaging studies established that the MCT-containing food compositions without an ingredient added to better incorporate MCT into the food matrix showed greater staining of the package. This would clearly be undesirable to the consumer. However, the inclusion of the ingredients that aid in the incorporation of MCT into the matrix and provide enhanced expansion of the food product during extrusion reduced the discoloration and staining of the package. Further, a package with more desirable properties was a multi-ply SOS bag with heat-sealed bottom, having at least an inner ply comprising 40 lb. Natural Kraft/7 lbs. LDPE/0.000285" Aluminum Foil/10 lbs Surlyn, and an outer ply comprising 31 lb MFBK, treated with flourochemical, Clay coated to 38 lbs (Paper C/L 05).

In the specification, there have been disclosed typical preferred embodiments of the invention and, although specific terms are employed, they are used in a generic and descriptive sense only and not for purposes of limitation, the scope of the invention being set forth in the following claims.

## Claims

1. A food composition comprising from 1-60% protein, from 1-50% carbohydrate, from 1-40% MCT fat, and a maintaining amount of at least one MCT maintaining component,
wherein the food composition comprises at least one MCT integrally incorporated into the food matrix and at least one MCT not integrally incorporated into the food matrix,
wherein the MCT from the MCT fat is integrally incorporated into the food composition and comprises from 2-10% of the food composition;
wherein the MCT not integrally incorporated into the food matrix is a coating comprising 2 to 7% MCT of the food composition;
wherein the food composition comprises from 10-15% total MCT; wherein the MCT maintaining component comprises gluten meal and wherein the food composition is an extruded food composition.

2. The food composition of claim 1 wherein the MCT maintaining component comprises one or more of a component that alters the structure of water in the food composition, a component that binds fat in the food composition, or a component that emulsifies or stabilizes the fat in the food composition, or combination thereof.

3. The food composition of claim 1 wherein the MCT maintaining component comprises (a) a starch, fiber, gluten meal, protein, an emulsifier, a stabilizer, a gum, or a gelling agent; optionally wherein the MCT maintaining component comprises a component from a cereal crop; optionally wherein the component from a cereal crop includes one or more of corn, wheat, rice, barley, sorghum, millet, oats, rye, triticale, buckwheat, fonio, quinoa, lupines, soybean meal, soybean protein, and soybean fiber; or (b) comprises gluten meal; optionally wherein the gluten meal comprises from 60-95% protein; optionally wherein the gluten meal is corn gluten meal added at up to 14% of the food composition; or (c) comprises starch or a starch product; optionally wherein the starch is rice starch or corn starch; optionally wherein the starch is added at up to 5% of the food composition; or (d) comprises fiber from soy; optionally wherein the fiber is from soy cotyledons; optionally wherein the fiber is added at up to 5% of the food composition.

4. The food composition of claim 1 comprising from 20-32% protein, from 30-50% carbohydrate, from 5-20% fat, and from15-25% moisture; optionally having 5-8% MCT integrally incorporated into the food composition.

5. The food composition of claim 1 further comprising one or more flavor-enhancing agents, palatability-enhancing agents, aroma-enhancing agents, and color-enhancing agents.

6. A process for manufacturing a food composition according to claim 1 comprising from 1-60% protein, from1-50% carbohydrate, from 1-40% MCT fat, and a maintaining amount of at least one MCT maintaining component, wherein the food composition comprises at least one MCT integrally incorporated into the food matrix and at least one MCT not integrally incorporated into the food matrix, wherein the MCT from the MCT fat is integrally incorporated into the food composition and comprises from 2-10% of the food composition; the process comprising:
(a) combining at least a first portion of the MCT with a MCT maintaining component prior to a processing operation;
(b) processing the food composition; and
(c) adding a second portion of the MCT to the processed food composition as a coating or surface treatment, wherein the MCT in the coating comprise 2 to 7% of the food composition, and wherein the food composition comprises 10-15% total MCT.

7. The process of claim 6 wherein (a) the MCT maintaining component comprises a starch, fiber, gluten meal, protein, an emulsifier, or a stabilizer; or (b) the MCT maintaining component comprises a component from a cereal crop; optionally wherein the cereal includes one or more of corn, wheat, rice, barley, sorghum, millet, oats, rye, triticale, buckwheat, fonio, quinoa, lupines, soybean meal, soybean protein, and soybean fiber; or (c) the MCT maintaining component comprises gluten meal; optionally wherein (i) the gluten meal comprises from 60-95% protein; or (ii) the gluten meal is corn gluten meal added at up to 14%; or (d) the MCT maintaining component comprises starch; optionally wherein the ingredient is starch is rice or corn starch; optionally wherein the starch is added at up to 5%; or (e) the MCT maintaining component comprises fiber from soy; optionally wherein the fiber is from soy cotyledons or the fiber is added at up to 5%; or (f) the at least one MCT maintaining component comprises one or more of soy cotyledon fiber at up to 5%, starch from corn or rice at up to 590, gluten meal having at least 75% to 80% protein, at up to 14%, or any combination thereof.

8. The process of claim 6 wherein the food composition comprises 20 to 32% protein, 30 to 50% carbohydrate, 5 to 20% fat, and 15 to 25% moisture.

9. The process of claim 6 wherein the processing operation in step (a) is extrusion, and the processing step in (b) is extruding the food composition.

10. A method of formulating a food composition comprising MCT according to claim 1 comprising:
(a) selecting a formula comprising ingredients for a food composition that does not contain MCT;
(b) determining an amount of MCT to be added to the food composition containing MCT;
(c) determining a source and amount of fat in the formula for the food composition that does not contain MCT, to be replaced with the MCT in the food composition containing the MCT;
(d) eliminating the source of fat from the formula in an amount equal to the amount of MCT to be added to the food composition containing MCT, so as to maintain the total fat concentration in the food composition containing the MCT substantially unchanged from the food composition not containing MCT;
(e) replacing at least a portion of one or more cereal ingredients in the formula selected in step (a) with at least one MCT maintaining component, so as to maintain the total protein and carbohydrate concentration in the food composition containing the MCT substantially unchanged from the food composition not containing MCT; and
(f) formulating the food comprising MCT by including MCT in the formula in place of the source of fat eliminated in step (d); and including the at least one MCT maintaining component in place of the one or more cereal ingredients.

11. The method of claim 10 wherein the one or more cereal ingredients replaced in step (e) do not include a primary cereal ingredient in the food composition; optionally wherein the MCT maintaining component comprises a starch, fiber, gluten meal, protein, an emulsifier, or a stabilizer; optionally wherein the MCT maintaining component comprises (a) a component from a cereal crop; optionally wherein the cereal includes one or more of corn, wheat, rice, barley, sorghum, millet, oats, rye, triticale, buckwheat, fonio, quinoa, lupines, soybean meal, soybean protein, and soybean fiber; or (b) gluten meal; optionally wherein the gluten meal comprises from 60% to 95% protein or the gluten meal comprises at least 75% to 80% protein; optionally wherein the gluten meal is corn gluten meal added at up to 14%; or (c) starch; optionally wherein the ingredient is rice or corn starch; optionally wherein the starch is added at up to 5%; or (d) fiber from soy; optionally wherein the fiber is from soy cotyledons; optionally wherein the fiber is added at up to 5%.

12. The method of claim 10 wherein the at least one MCT maintaining component comprises one or more of soy cotyledon fiber at up to 5%, starch from corn or rice at up to 5%, up to 14% gluten meal having at least 75% to 80% protein, or any combination thereof; optionally wherein the food composition comprises 20 to 32% protein, 30 to 50% carbohydrate, 5 to 20% fat, and 15 to 25% moisture; optionally wherein the food composition has 2 to 8% MCT integrally incorporated therein; optionally wherein the food composition is an extruded food product; optionally further comprising the steps of
(g) combining at least a first portion of the MCT with one or more other ingredients prior to extruding the food composition; and
(h) extruding the food composition; optionally further comprising the step of applying a coating after the extrusion step, the coating comprising a second portion of MCT, and further comprising one or more of a flavor-enhancing agent, a palatability-enhancing agent, an aroma-enhancing agent, and a color-enhancing agent, wherein the MCT in the coating comprise 2 to 7% of the food composition wherein the food composition comprises 10-15% total MCT, including the MCT in the coating.

13. The food composition of claim 1 for use in promoting the health and wellness of an animal.

## Patentansprüche

1. Lebensmittelzusammensetzung, umfassend von 1 bis 60 % Protein, von 1 bis 50 % Kohlenhydrat, von 1 bis 40 % MCT-Fett und eine aufrechterhaltende Menge von mindestens einer MCT aufrechterhaltenden Komponente,
wobei die Lebensmittelzusammensetzung mindestens ein integral in die Lebensmittelmatrix eingeschlossenes MCT und mindestens ein nicht integral in die Lebensmittelmatrix eingeschlossenes MCT umfasst,
wobei das MCT aus dem MCT-Fett integral in die Lebensmittelzusammensetzung eingeschlossen ist und von 2 bis 10 % der Lebensmittelzusammensetzung umfasst;
wobei das nicht integral in die Lebensmittelmatrix eingeschlossene MCT eine Beschichtung ist, die 2 bis 7 % MCT der Lebensmittelzusammensetzung umfasst;
wobei die Lebensmittelzusammensetzung von 10 bis 15 % Gesamt-MCT umfasst;
wobei die MCT aufrechterhaltende Komponente Glutenmehl umfasst und
wobei die Lebensmittelzusammensetzung eine extrudierte Lebensmittelzusammensetzung ist.

2. Lebensmittelzusammensetzung nach Anspruch 1, wobei die MCT aufrechterhaltende Komponente eine oder mehrere von einer Komponente, welche die Struktur von Wasser in der Lebensmittelzusammensetzung verändert, einer Komponente, die Fett in der Lebensmittelzusammensetzung bindet, oder einer Komponente, die das Fett in der Lebensmittelzusammensetzung emulgiert oder stabilisiert, oder eine Kombination davon umfasst.

3. Lebensmittelzusammensetzung nach Anspruch 1, wobei die MCT aufrechterhaltende Komponente (a) eine Stärke, eine Faser, ein Glutenmehl, ein Protein, einen Emulgator, ein Stabilisierungsmittel, ein Gummi oder ein Geliermittel umfasst; wobei wahlweise die MCT aufrechterhaltende Komponente eine Komponente aus einer Getreidefrucht umfasst; wobei wahlweise die Komponente aus einer Getreidefrucht eines oder mehreres von Mais, Weizen, Reis, Gerste, Sorghum, Hirse, Hafer, Roggen, Triticale, Buchweizen, Fonio, Quinoa, Lupinen, Sojabohnenmehl, Sojabohnenprotein und Sojabohnenfaser einschließt; oder (b) Glutenmehl umfasst; wobei wahlweise das Glutenmehl von 60 bis 95 % Protein umfasst; wobei wahlweise das Glutenmehl Maisglutenmehl ist, das zu bis zu 14 % der Lebensmittelzusammensetzung hinzugefügt ist; oder (c) Stärke oder ein Stärkeprodukt umfasst; wobei wahlweise die Stärke Reisstärke oder Maisstärke ist; wobei wahlweise die Stärke zu bis zu 5 % der Lebensmittelzusammensetzung hinzugefügt ist; oder (d) Faser aus Soja umfasst; wobei wahlweise die Faser aus Sojakotyledonen stammt; wobei wahlweise die Faser zu bis zu 5 % der Lebensmittelzusammensetzung hinzugefügt ist.

4. Lebensmittelzusammensetzung nach Anspruch 1, umfassend von 20 bis 32 % Protein, von 30 bis 50 % Kohlenhydrat, von 5 bis 20 % Fett und von 15 bis 25 % Feuchtigkeit; wahlweise mit 5 bis 8 % integral in die Lebensmittelzusammensetzung eingeschlossenem MCT.

5. Lebensmittelzusammensetzung nach Anspruch 1, ferner umfassend einen oder mehrere Geschmacksverstärker, Schmackhaftigkeitsverstärker, Aromaverstärker und Farbverstärker.

6. Verfahren zur Herstellung einer Lebensmittelzusammensetzung nach Anspruch 1, umfassend von 1 bis 60 % Protein, von 1 bis 50 % Kohlenhydrat, von 1 bis 40 % MCT-Fett und eine aufrechterhaltende Menge von mindestens einer MCT aufrechterhaltenden Komponente, wobei die Lebensmittelzusammensetzung mindestens ein integral in die Lebensmittelmatrix eingeschlossenes MCT und mindestens ein nicht integral in die Lebensmittelmatrix eingeschlossenes MCT umfasst, wobei das MCT aus dem MCT-Fett integral in die Lebensmittelzusammensetzung eingeschlossen ist und von 2 bis 10 % der Lebensmittelzusammensetzung umfasst; wobei das Verfahren Folgendes umfasst:
(a) Kombinieren wenigstens eines ersten Teils des MCT mit einer MCT aufrechterhaltenden Komponente vor einem Verarbeitungsvorgang;
(b) Verarbeiten der Lebensmittelzusammensetzung; und
(c) Hinzufügen eines zweiten Teils des MCT zu der verarbeiteten Lebensmittelzusammensetzung als eine Beschichtung oder Oberflächenbehandlung, wobei die MCT in der Beschichtung 2 bis 7 % der Lebensmittelzusammensetzung umfassen, und wobei die Lebensmittelzusammensetzung 10 bis 15 % Gesamt-MCT umfasst.

7. Verfahren nach Anspruch 6, wobei (a) die MCT aufrechterhaltende Komponente eine Stärke, eine Faser, ein Glutenmehl, ein Protein, einen Emulgator oder ein Stabilisierungsmittel umfasst; oder (b) die MCT aufrechterhaltende Komponente eine Komponente aus einer Getreidefrucht umfasst; wobei wahlweise das Getreide eines oder mehreres von Mais, Weizen, Reis, Gerste, Sorghum, Hirse, Hafer, Roggen, Triticale, Buchweizen, Fonio, Quinoa, Lupinen, Sojabohnenmehl, Sojabohnenprotein und Sojabohnenfaser einschließt; oder (c) die MCT aufrechterhaltende Komponente Glutenmehl umfasst; wobei wahlweise (i) das Glutenmehl von 60 bis 95 % Protein umfasst; oder (ii) das Glutenmehl Maisglutenmehl ist, das zu bis zu 14 % hinzugefügt ist; oder (d) die MCT aufrechterhaltende Komponente Stärke umfasst; wobei wahlweise der Bestandteil Stärke ist Reis- oder Maisstärke ist; wobei wahlweise die Stärke zu bis zu 5 % hinzugefügt ist; oder (e) die MCT aufrechterhaltende Komponente Faser aus Soja umfasst; wobei wahlweise die Faser aus Sojakotyledonen stammt oder die Faser zu bis zu 5 % hinzugefügt ist; oder (f) die mindestens eine MCT aufrechterhaltende Komponente eines oder mehreres von Sojakotyledonfaser zu bis zu 5 %, Stärke aus Mais oder Reis zu bis zu 5 %, Glutenmehl mit mindestens 75 % bis 80 % Protein zu bis zu 14 % oder eine beliebige Kombination davon umfasst.

8. Verfahren nach Anspruch 6, wobei die Lebensmittelzusammensetzung 20 bis 32 % Protein, 30 bis 50 % Kohlenhydrat, 5 bis 20 % Fett und 15 bis 25 % Feuchtigkeit umfasst.

9. Verfahren nach Anspruch 6, wobei der Verarbeitungsvorgang in Schritt (a) Extrusion ist und der Verarbeitungsschritt in (b) Extrudieren der Lebensmittelzusammensetzung ist.

10. Verfahren zur Formulierung einer MCT umfassenden Lebensmittelzusammensetzung nach Anspruch 1, umfassend:
(a) Auswählen einer Formel, die Bestandteile für eine Lebensmittelzusammensetzung umfasst, die kein MCT enthält;
(b) Bestimmen einer Menge an MCT, die zu der MCT enthaltenden Lebensmittelzusammensetzung hinzugefügt werden soll;
(c) Bestimmen einer Fettquelle und -menge in der Formel für die Lebensmittelzusammensetzung, die kein MCT enthält, welche durch das MCT in der das MCT enthaltenden Lebensmittelzusammensetzung ersetzt werden sollen;
(d) Eliminieren der Fettquelle aus der Formel in einer Menge, die gleich der Menge an MCT ist, die zu der MCT enthaltenden Lebensmittelzusammensetzung hinzugefügt werden soll, um die Gesamt-Fettkonzentration in der das MCT enthaltenden Lebensmittelzusammensetzung gegenüber der nicht MCT enthaltenden Lebensmittelzusammensetzung im Wesentlichen unverändert zu halten;
(e) Ersetzen wenigstens eines Teils eines oder mehrerer Getreidebestandteile in der in Schritt (a) ausgewählten Formel durch mindestens eine MCT aufrechterhaltende Komponente, um die Gesamt-Protein- und -Kohlenhydratkonzentration in der das MCT enthaltenden Lebensmittelzusammensetzung gegenüber der nicht MCT enthaltenden Lebensmittelzusammensetzung im Wesentlichen unverändert zu halten; und
(f) Formulieren des MCT umfassenden Lebensmittels durch Einschließen von MCT in die Formel anstelle der in Schritt (d) eliminierten Fettquelle; und Einschließen der mindestens einen MCT aufrechterhaltenden Komponente anstelle des einen oder der mehreren Getreidebestandteile.

11. Verfahren nach Anspruch 10, wobei der eine oder die mehreren in Schritt (e) ersetzten Getreidebestandteile keinen primären Getreidebestandteil in der Lebensmittelzusammensetzung einschließen; wobei wahlweise die MCT aufrechterhaltende Komponente eine Stärke, eine Faser, ein Glutenmehl, ein Protein, einen Emulgator oder ein Stabilisierungsmittel umfasst; wobei wahlweise die MCT aufrechterhaltende Komponente (a) eine Komponente aus einer Getreidefrucht umfasst; wobei wahlweise das Getreide eines oder mehreres von Mais, Weizen, Reis, Gerste, Sorghum, Hirse, Hafer, Roggen, Triticale, Buchweizen, Fonio, Quinoa, Lupinen, Sojabohnenmehl, Sojabohnenprotein und Sojabohnenfaser einschließt; oder (b) Glutenmehl; wobei wahlweise das Glutenmehl von 60 % bis 95 % Protein umfasst oder das Glutenmehl mindestens 75 % bis 80 % Protein umfasst; wobei wahlweise das Glutenmehl Maisglutenmehl ist, das zu bis zu 14 % hinzugefügt ist; oder (c) Stärke; wobei wahlweise der Bestandteil Reis- oder Maisstärke ist; wobei wahlweise die Stärke zu bis zu 5 % hinzugefügt ist; oder (d) Faser aus Soja; wobei wahlweise die Faser aus Sojakotyledonen stammt; wobei wahlweise die Faser zu bis zu 5 % hinzugefügt ist.

12. Verfahren nach Anspruch 10, wobei die mindestens eine MCT aufrechterhaltende Komponente eines oder mehreres von Sojakotyledonfaser zu bis zu 5 %, Stärke aus Mais oder Reis zu bis zu 5 %, bis zu 14 % Glutenmehl mit mindestens 75 % bis 80 % Protein oder eine beliebige Kombination davon umfasst; wobei wahlweise die Lebensmittelzusammensetzung 20 bis 32 % Protein, 30 bis 50 % Kohlenhydrat, 5 bis 20 % Fett und 15 bis 25 % Feuchtigkeit umfasst; wobei wahlweise die Lebensmittelzusammensetzung 2 bis 8 % integral darin eingeschlossenes MCT aufweist; wobei wahlweise die Lebensmittelzusammensetzung ein extrudiertes Lebensmittelprodukt ist; wahlweise ferner umfassend die Schritte
(g) Kombinieren mindestens eines ersten Teils des MCT mit einem oder mehreren anderen Bestandteilen vor dem Extrudieren der Lebensmittelzusammensetzung; und
(h) Extrudieren der Lebensmittelzusammensetzung; wahlweise ferner umfassend den Schritt des Auftragens einer Beschichtung nach dem Extrusionsschritt, wobei die Beschichtung einen zweiten Teil von MCT umfasst, und ferner umfassend einen oder mehrere von einem Geschmacksverstärker, einem Schmackhaftigkeitsverstärker, einem Aromaverstärker und einem Farbverstärker, wobei die MCT in der Beschichtung 2 bis 7 % der Lebensmittelzusammensetzung umfassen; wobei die Lebensmittelzusammensetzung 10 bis 15 % Gesamt-MCT, einschließlich der MCT in der Beschichtung, umfasst.

13. Lebensmittelzusammensetzung nach Anspruch 1 zur Verwendung bei der Förderung der Gesundheit und des Wohlbefindens eines Tiers.

## Revendications

1. Composition alimentaire comprenant de 1 à 60 % de protéine, de 1 à 50 % de glucide, de 1 à 40 % de matière grasse de type triglycéride à chaîne moyenne (TCM) et une quantité de maintien d'au moins un composant de maintien de TCM,
où la composition alimentaire comprend au moins un TCM incorporé intégralement dans la matrice alimentaire et au moins un TCM qui n'est pas incorporé intégralement dans la matrice alimentaire,
dans laquelle le TCM de la matière grasse de type TCM est incorporé intégralement dans la composition alimentaire et constitue de 2 à 10 % de la composition alimentaire ;
dans laquelle le TCM non incorporé intégralement dans la matrice alimentaire est un enrobage comprenant 2 à 7 % de TCM de la composition alimentaire ;
où la composition alimentaire comprend de 10 à 15 % de TCM totaux ; dans laquelle le composant de maintien de TCM comprend de la farine de gluten et
où la composition alimentaire est une composition alimentaire extrudée.

2. Composition alimentaire selon la revendication 1, dans laquelle le composant de maintien de TCM comprend un ou plusieurs parmi un composant qui modifie la structure de l'eau dans la composition alimentaire, un composant qui lie la matière grasse dans la composition alimentaire, ou un composant qui émulsifie ou stabilise la matière grasse dans la composition alimentaire, ou une combinaison de ceux-ci.

3. Composition alimentaire selon la revendication 1, dans laquelle le composant de maintien de TCM comprend (a) un amidon, une fibre, de la farine de gluten, une protéine, un émulsifiant, un agent stabilisant, une gomme ou un agent gélifiant ; éventuellement dans laquelle le composant de maintien de TCM comprend un composant provenant d'une culture céréalière ; éventuellement dans laquelle le composant provenant d'une culture céréalière inclut un ou plusieurs parmi le maïs, le blé, le riz, l'orge, le sorgho, le millet, l'avoine, le seigle, le triticale, le sarrasin, le fonio, le quinoa, le lupin, la farine de soja, une protéine de soja et une fibre de soja ; ou (b) comprend de la farine de gluten ; éventuellement dans laquelle la farine de gluten comprend de 60 à 95 % de protéine ; éventuellement dans laquelle la farine de gluten est de la farine de gluten de maïs ajoutée à un taux jusqu'à 14 % de la composition alimentaire ; ou (c) comprend de l'amidon ou un produit d'amidon ; éventuellement dans laquelle l'amidon est de l'amidon de riz ou de l'amidon de maïs ; éventuellement dans laquelle l'amidon est ajouté à un taux jusqu'à 5 % de la composition alimentaire ; ou (d) comprend une fibre provenant de soja ; éventuellement dans laquelle la fibre provient de cotylédons de soja ; éventuellement dans laquelle la fibre est ajoutée à un taux jusqu'à 5 % de la composition alimentaire.

4. Composition alimentaire selon la revendication 1, comprenant de 20 à 32 % de protéine, de 30 à 50 % de glucide, de 5 à 20 % de matière grasse et de 15 à 25 % d'humidité ; ayant éventuellement 5 à 8 % de TCM incorporés intégralement dans la composition alimentaire.

5. Composition alimentaire selon la revendication 1, comprenant en outre un ou plusieurs agents de renforcement de goût, agents de renforcement de sapidité, agents de renforcement d'arôme et agents de renforcement de couleur.

6. Procédé de fabrication d'une composition alimentaire selon la revendication 1, comprenant de 1 à 60 % de protéine, de 1 à 50 % de glucide, de 1 à 40 % de matière grasse de type TCM, et une quantité de maintien d'au moins un composant de maintien de TCM, dans lequel la composition alimentaire comprend au moins un TCM incorporé intégralement dans la matrice alimentaire et au moins un TCM qui n'est pas incorporé intégralement dans la matrice alimentaire, dans lequel le TCM provenant de la matière grasse de type TCM est incorporé intégralement dans la composition alimentaire et constitue de 2 à 10 % de la composition alimentaire ; le procédé comprenant :
(a) la combinaison d'au moins une première partie du TCM avec un composant de maintien de TCM avant une opération de traitement ;
(b) le traitement de la composition alimentaire ; et
(c) l'ajout d'une deuxième partie du TCM à la composition alimentaire traitée en tant qu'enrobage ou traitement de surface, dans lequel le TCM dans l'enrobage constitue 2 à 7 % de la composition alimentaire, et dans lequel la composition alimentaire comprend 10 à 15 % de TCM totaux.

7. Procédé selon la revendication 6, dans lequel (a) le composant de maintien de TCM comprend un amidon, une fibre, de la farine de gluten, une protéine, un émulsifiant ou un agent stabilisant ; ou (b) le composant de maintien de TCM comprend un composant provenant d'une culture céréalière ; éventuellement dans lequel la céréale inclut un ou plusieurs parmi le maïs, le blé, le riz, l'orge, le sorgho, le millet, l'avoine, le seigle, le triticale, le sarrasin, le fonio, le quinoa, le lupin, la farine de soja, une protéine de soja et une fibre de soja ; ou (c) le composant de maintien de TCM comprend de la farine de gluten ; éventuellement dans lequel (i) la farine de gluten comprend de 60 à 95 % de protéine ; ou (ii) la farine de gluten est de la farine de gluten de maïs ajoutée à un taux jusqu'à 14 % ; ou (d) le composant de maintien de TCM comprend de l'amidon ; éventuellement dans lequel l'ingrédient est de l'amidon est de l'amidon de riz ou de maïs ; éventuellement dans lequel l'amidon est ajouté à un taux jusqu'à 5 % ; ou (e) le composant de maintien de TCM comprend une fibre provenant de soja ; éventuellement dans lequel la fibre provient de cotylédons de soja ou la fibre est ajoutée à un taux jusqu'à 5 % ; ou (f) ledit au moins un composant de maintien de TCM comprend un ou plusieurs parmi des fibres de cotylédons de soja à un taux jusqu'à 5 %, de l'amidon provenant de maïs ou de riz à un taux jusqu'à 5 %, de la farine de gluten ayant au moins 75 % à 80 % de protéine, à un taux jusqu'à 14 %, ou n'importe quelle combinaison de ceux-ci.

8. Procédé selon la revendication 6, dans lequel la composition alimentaire comprend 20 à 32 % de protéine, 30 à 50 % de glucide, 5 à 20 % de matière grasse et 15 à 25 % d'humidité.

9. Procédé selon la revendication 6, dans lequel l'opération de traitement à l'étape (a) est une extrusion, et l'étape de traitement en (b) est l'extrusion de la composition alimentaire.

10. Procédé de formulation d'une composition alimentaire comprenant des TCM selon la revendication 1, comprenant :
(a) la sélection d'une formulation comprenant des ingrédients pour une composition alimentaire qui ne contient pas de TCM ;
(b) la détermination d'une quantité de TCM à ajouter à la composition alimentaire contenant des TCM ;
(c) la détermination d'une source et d'une quantité de matière grasse dans la formulation pour la composition alimentaire qui ne contient pas de TCM, à remplacer par les TCM dans la composition alimentaire contenant des TCM ;
(d) l'élimination de la source de matière grasse de la formulation en une quantité égale à la quantité de TCM à ajouter à la composition alimentaire contenant des TCM, de façon à maintenir la concentration totale en matière grasse dans la composition alimentaire contenant les TCM essentiellement inchangée par rapport à la composition alimentaire ne contenant pas de TCM ;
(e) le remplacement d'au moins une partie d'un ou plusieurs ingrédients céréaliers dans la formulation sélectionnée à l'étape (a) par au moins un composant de maintien de TCM, de façon à maintenir la concentration totale en protéine et en glucide dans la composition alimentaire contenant les TCM essentiellement inchangée par rapport à la composition alimentaire ne contenant pas de TCM ; et
(f) la formulation de l'aliment comprenant des TCM en incluant des TCM dans la formulation à la place de la source de matière grasse éliminée à l'étape (d) ; et l'inclusion dudit au moins un composant de maintien de TCM à la place du ou des ingrédients céréaliers.

11. Procédé selon la revendication 10, dans lequel le ou les ingrédients céréaliers remplacés à l'étape (e) n'incluent pas d'ingrédient céréalier primaire dans la composition alimentaire ; éventuellement dans lequel le composant de maintien de TCM comprend un amidon, une fibre, de la farine de gluten, une protéine, un émulsifiant ou un agent stabilisant ; éventuellement dans lequel le composant de maintien de TCM comprend (a) un composant provenant d'une culture céréalière ; éventuellement dans lequel la céréale inclut un ou plusieurs parmi le maïs, le blé, le riz, l'orge, le sorgho, le millet, l'avoine, le seigle, le triticale, le sarrasin, le fonio, le quinoa, le lupin, la farine de soja, une protéine de soja et une fibre de soja ; ou (b) de la farine de gluten ; éventuellement dans lequel la farine de gluten comprend de 60 % à 95 % de protéine ou la farine de gluten comprend au moins 75 % à 80 % de protéine ; éventuellement dans lequel la farine de gluten est de la farine de gluten de maïs ajoutée à un taux jusqu'à 14 % ; ou (c) de l'amidon ; éventuellement dans lequel l'ingrédient est de l'amidon de riz ou de maïs ; éventuellement dans lequel l'amidon est ajouté à un taux jusqu'à 5 % ; ou (d) une fibre provenant de soja ; éventuellement dans lequel la fibre provient de cotylédons de soja ; éventuellement dans lequel la fibre est ajoutée à un taux jusqu'à 5 %.

12. Procédé selon la revendication 10, dans lequel ledit au moins un composant de maintien de TCM comprend un ou plusieurs parmi une fibre de cotylédons de soja à un taux jusqu'à 5 %, de l'amidon provenant de maïs ou de riz à un taux jusqu'à 5 %, jusqu'à 14 % de farine de gluten ayant au moins 75 % à 80 % de protéine, ou n'importe quelle combinaison de ceux-ci ; éventuellement dans lequel la composition alimentaire comprend 20 à 32 % de protéine, 30 à 50 % de glucide, 5 à 20 % de matière grasse et 15 à 25 % d'humidité ; éventuellement dans lequel la composition alimentaire a 2 à 8 % de TCM incorporé intégralement en son sein ; éventuellement dans lequel la composition alimentaire est un produit alimentaire extrudé ; comprenant en outre éventuellement les étapes consistant à
(g) combiner au moins une première partie du TCM avec un ou plusieurs autres ingrédients avant d'extruder la composition alimentaire ; et
(h) extruder la composition alimentaire ; comprenant en outre éventuellement l'étape consistant à appliquer un enrobage après l'étape d'extrusion, l'enrobage comprenant une deuxième partie de TCM, et comprenant en outre un ou plusieurs parmi un agent de renforcement de goût, un agent de renforcement de sapidité, un agent de renforcement d'arôme, et un agent de renforcement de couleur, dans lequel le TCM dans l'enrobage constitue 2 à 7 % de la composition alimentaire ; dans lequel la composition alimentaire comprend 10 à 15 % de TCM totaux, y compris les TCM dans l'enrobage.

13. Composition alimentaire selon la revendication 1, à utiliser pour promouvoir la santé et le bien-être d'un animal.
